# EUROPEAN PATENT APPLICATION

(11) **EP 1 435 271 A1**
(43) Date of publication of application: **07.07.2004**
(21) Application number: 02755734.7
(22) Date of filing: 31.07.2002
(51) Int. Cl.: B23B 27/16

(54) **ULTRA HIGH−PRESSURE SINTERED CUTTER WITH RECESS OR GROOVE, HOLDING MECHANISM FOR THE CUTTER, AND METHOD OF MANUFACTURING THE CUTTER**

(30) Priority: 10.08.2001 JP 2001243972
(71) Applicant: Sumitomo Electric Industries, Ltd., Osaka-shi, Osaka 541-0041 (JP)
(72) Inventor: UEDA, Joji, Itami Works of Sumitomo Elec. Ind. Ltd, Itami-shi, Hyogo 664-0016 (JP); BABA, Ryousuke, Itami Works of Sumitomo E. Ind Ltd, Itami-shi, Hyogo 664-0016 (JP); SAHASHI, Toshiyuki, Itami W. of Sumitomo E Ind Ltd, Itami-shi, Hyogo 664-0016 (JP); KUKINO, Satoru, Itami Works of Sumitomo E. Ind Ltd, Itami-shi, Hyogo 664-0016 (JP)
(74) Representative: Cross, Rupert Edward Blount
(86) International application number: PCT/JP2002/007828
(87) International publication number: WO 2003/015968

(57) **Abstract**

With conventional small troublesome indexable inserts from high-pressure sintered materials having neither a screw-hole nor a cavity for attaching the insert to a toolholder, clamping the insert onto the holder has been complicated and the tightening force has been weak. The cause behind this is that with the hardness of high-pressure sintered material being high, surface machining is extremely difficult.

A toolholder attachment cavity is provided in the rake face of an indexable insert composed of a high-pressure sintered material, by machining with a laser whose light output power is adjusted and whose light-harvesting is enhanced using a galvanometer mirror, while high-precision controlling the beaming position. This allows small-scale indexable insert of high-pressure sintered material to be mounted onto a holder simply and securely with a clamp, and makes for curtailed prep time, improved machining precision, and better mounting reliability.

## Description

### Technical Field

The present invention is to afford cutting tools made from high-pressure sintered materials such as sintered diamond and sintered cubic boron nitride (denoted "cBN" hereinafter), which have cavities or grooves, and to afford a method of manufacturing such cutting tools.

### Background Art

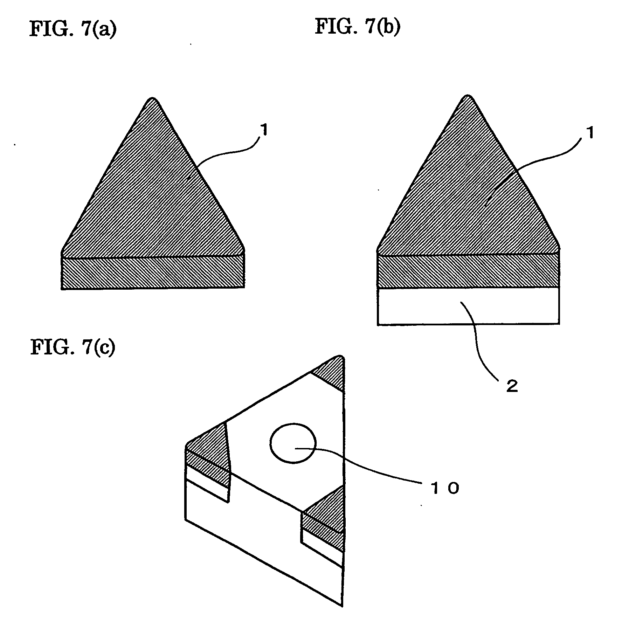

Cutting tools whose cutting edges are a high-pressure sintered material can be grouped into the following three categories if they are to be classified broadly. The first is one in which the entire cutting tool is, as depicted in Fig. 7(a), constituted by a high-pressure sintered material 1 and is employed especially in smaller-scale cutting implementations. The second is one in which the high-pressure sintered material 1 is, as depicted in Fig. 7(b), reinforced with a back metal 2 made of a cemented carbide. The third is one in which, as depicted in Fig. 7, a cemented carbide is made a substrate and portions thereof are cut away, leaving pockets, and a high-pressure sintered material with attached back metal is brazed into the pockets. In the example depicted in Fig. 7(c), there is a clamping hole in the center portion.

Although high-pressure sintered materials have a high degree of hardness and are superior in wear resistance, due to their high cost every effort is being made to curtail the amount of such material employed in cutting tools. Consequently, in cutting tools lent a large geometry in which the diameter of the inscribed circle is 3.97 mm or more, the third configuration just mentioned has chiefly been adopted. (In most cases the size of a tool generally is determined by the inscribed circle.) On the other hand, the first and second configurations have been adopted in cutting tools lent a small geometry. The reason for this is because rather than adopting the third configuration to cut down on the amount of material used, employing as the tool the high-pressure sintered material just as cut out, without brazing it onto a carbide substrate, allows for economical manufacturing. Likewise, in that demands for enhanced efficiency in cutting operations have intensified of late, cutting work in some cases is done at an extensive depth-of-cut and feed rate; yet in such heavy-duty cutting instances, the first and second cutting-tool configurations are sometimes chosen even for tools having a comparatively large geometry, for reasons such as that with cutting tools of the third configuration the length of the cutting tooth would be insufficient or the rise in cutting edge temperature due to the great heat produced when cutting would risk the brazing weld coming loose.

For mounting cutting tools, systems in which tools having a hole in the center portion are clamped to a toolholder using a screw or the like through the hole are known. Another system that is often employed is called the "clamp-on" system. In the clamp-on system, cutting tools without a hole are clamped onto a holder with a clamp that presses them against the holder through the top of the tool. A problem with systems in which a mounting hole is provided in the cutting tool is that in smaller-scale tools, boring a hole through the center portion degrades the mechanical strength of the tool itself. Likewise, a problem with the clamp-on system is that because the cutting tool is clasped relying solely on friction between the tool and the holder, the retaining strength compared with systems using a mounting hole is relatively weak.

It is important to note here that high-pressure sintered materials are sintered under extremely high pressures/high temperatures into billets of diameter 25 mm or more. Then in order to manufacture cutting tools utilizing the billets as the source material, the billets are put through a variety of machining processes. Nevertheless, with the hardness of high-pressure sintered materials being extremely high their workability is tough, and methods of machining the materials are greatly restricted.

General cutting tools whose cutting edges are a high-pressure sintered material are fashioned by brazing onto a substrate sintered compacts that have been machined to cut them into a predetermined shape that for the most part is as shown in Fig. 7(c). For cutting operations on high-pressure sintered materials, slicing, wire cutting, laser machining, and electric-discharge machining are known methods. Among these, electric-discharge machining is applicable only to objects that are electrically conductive.

Japanese Pat. App. Pub. No. H07-299577 discloses, in a method of machining cubic-boron-nitride sintered compacts by beaming laser light onto them, a technique of performing the work in a nitrogen or inert-gas atmosphere. The invention concerns cutting sintered cBN compacts, and enables cutting and other machining operations on the compacts at lower laser output power by comparison with conventional machining in air, making it possible to produce cut surfaces free of cracks, with few heat-induced aberrations. Japanese Pat. App. Pub. No. H04-2402, meanwhile, discloses cutting tools made of whisker-reinforced ceramic that are provided with an attachment hole.

High-pressure sintered compacts in the aforementioned first or second configurations have been employed as conventional small-scale cutting tools made from high-pressure sintered materials. The clamping system in that case has been the clamp-on system. Retention with the clamp-on system, being principally by frictional force between the rake (cutting) face and a clamping part, has been unstable.

The case with the screw-clamping system, again, is that a through-hole in about the center portion of the cutting tool is required. Inasmuch as the tool strength declines in the through-hole part, a drawback is that the tool cannot be employed under harsh conditions.

With it being difficult as described earlier to machine high-pressure sintered materials due to their hardness, laser machining has come into application as one solution. However, because the focus of machining high-pressure sintered material with a laser conventionally has been cutting operations in which the laser energy penetrates a sintered cBN compact, the emphasis has been on machining speed, in which case high-power lasers have been used. The problem in such cases has been that with the laser beam being difficult to focus, heat-induced disfiguration is frequent, leading to significantly great kerf loss.

### Disclosure of Invention

The present invention pertains to compression-sinter cutting tools, characterized in that the entire rake face is constituted by a high-pressure sintered material, and in having a cavity or groove in the center portion of the rake face for clamping the tool onto a toolholder. The fact that, because the entire rake face is constituted by a high-pressure sintered material, there is no brazing weld in the cutting-edge vicinity eliminates brazing failure, and moreover simplifies the manufacturing procedure and enables process costs to be kept low. What is more, by means of the cavity or groove provided in the rake face, the cutting tool can be simultaneously pressed against the toolholder pocket and drawn in laterally against the holder, therefore eliminating occurrences of the tool becoming displaced on, or coming off, the holder.

With the aforementioned compression sinters, in some cases the entire tool is made of a high-pressure sintered material, and in others the side opposite the rake face is reinforced with a cemented carbide, but the present invention is applicable to either case. In applications where the tools are employed under cutting conditions generating large thermal loads, the entirety can be constituted by a high-pressure sintered material whose thermal conductivity is high, to alleviate the thermal load. On the other hand, with tools that are reinforced with a cemented carbide the overall toughness is enhanced by the toughness of the carbide, and because that much less of what is expensive high-pressure sintered material is used, the tool cost can be held down.

In addition, either sintered cBN compacts or sintered diamond compacts can be employed as the foregoing compression-sinters. Depending on the type of workpiece, optimal tool performance can be brought out by utilizing sintered diamond compacts on aluminum alloys, for example, and sintered cBN compacts on cast iron, steel, and ferrous alloys.

The foregoing cavity or groove provided in the rake face can be configured so that the line constituted by the intersection between either form and the rake face has rectilinear segments. By the present configuration, the cavity or groove is configured so as to have rectilinear segments within the tool surface, wherein by precision-machining the portions of the clamping part that, clamped to the toolholder, contact on the tool, contact between the clamp and the tool is made linear or planar, improving the retention force.

Likewise, the foregoing cavity can be rendered in the form of either a cone or frustum. In this case, making spherical or spheroidal in form the portions of the clamping part that, clamped to the toolholder, contact on the tool produces stabilized point contact, and eliminates instability in tightening force brought about by lopsided seating.

The shape of the cavity or groove in the present invention may take a variety of forms other than the above-described, such as tenon-like or mortise-like shapes, viewed from the rake face. By the tip end of the clamping part seating, when being tightened down, on the sloping surface of the cavity or the like, an action that draws the cutting tool in against the tool-binding face is produced. This force, then, is closely related to the slope of the cavity or like form; the steeper the slope is, the stronger the drawing-in force will be. In actual practice, the form of the cavity or the like is determined according to a balance between the just-noted drawing-in force and the clamping force against the toolholder.

In cases where the form of the cavity is the above-noted cone, the drawing-in force against the tool-binding face and the force clamping the cutting tool to the holder together will by and large be fixed, making for stabilized attachment. In terms of balancing the forces, the tip-end angle of the cone desirably is from 100 to 140 degrees. From 110 to 130 degrees therein is preferable in that balance is especially favorable. In cases where the form is tenon-like, the cutting tool can be bound more firmly to the tool-binding face.

The cavity or groove provided in the rake face according to the present invention is preferably formed by laser machining. Laser machining utilized in the present invention is applicable to both sintered cBN materials and to sintered diamond materials. Inasmuch as the hardness of these high-pressure sintered materials is high, sufficient machining speed cannot be obtained by grinding operations using a grinding wheel or the like, which does not allow for economical tool manufacture.

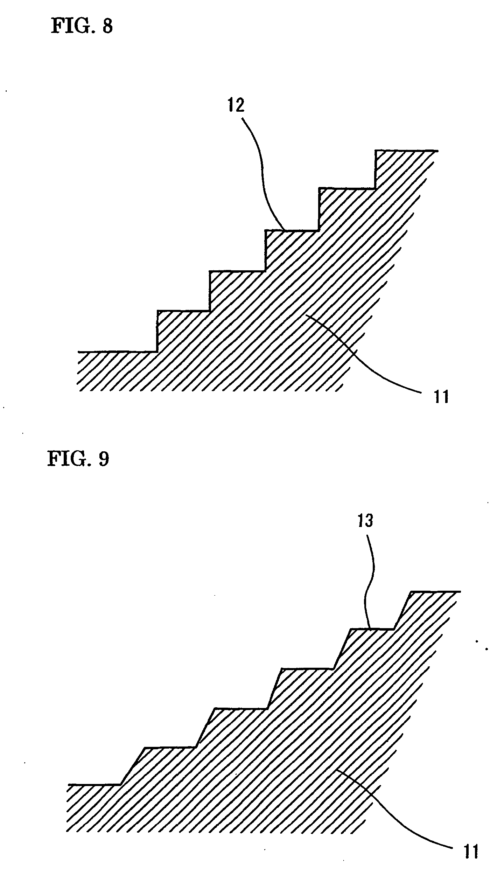

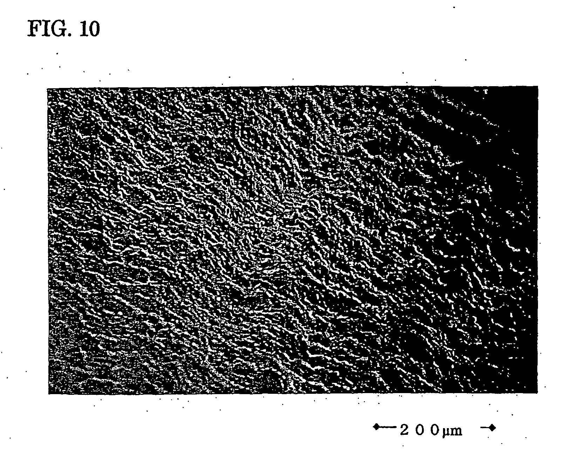

A feature of a cavity machined in this way is that remaining on the interior surface, when observed minutely, are dimple-like laser streaks (a dimple structure), as in one example thereof shown in Fig. 10. In cases where the cavity is machined with a rotating grindstone, grinding striations that are round and concentric with respect to the cavity center axis, or that are regularly ranged in a given direction will inevitably remain. Another feature of the cavity or groove of the invention in the present case, if viewed overall, is that a cross-section in a plane through the cavity is formed by a succession of straight lines. The cross-sectional form of a cavity or groove machined by a method of the present invention should theoretically turn out to be as shown in Fig. 8. That is, since the machining proceeds while scanning the laser beam in a different direction every time, and while reducing the scanning area gradually in stages, the cross-section turns out step-shaped. In practice, however, the cross-sectional form proves to be such that sloping surfaces inclined as represented in Fig. 9 are linked at varying angles. Nevertheless, a growth-ring-like pattern in keeping with the machining progress may be observed, allowing for distinction from conventional machining methods.

Meanwhile, in operations using electric-discharge machining, in general, machining of high-pressure sintered materials having an electrical resistivity of 1 mΩ·cm or more―whose electrical conductivity is low, or which they do not have―is impossible, but by a method of the present invention machining is possible even with high-pressure sintered materials having an electrical resistivity of 1 mΩ·cm or more.

Another aspect of the invention in the present application affords a clamping mechanism rendered so as to draw in a cutting tool the entire rake face of which is constituted by a high-pressure sintered material and which has a cavity or groove in the center portion of the rake face for attaching the tool to a toolholder, with a drawing-in portion of a clamping part attached to the holder seating in the cavity or groove, against a tool-binding face of the holder. Compared with conventional clamping mechanisms with which cutting tools whose rake face is planar are attached to a toolholder simply by pressing them against the holder, this serves to develop a more firm and stabilized retention force.

Additionally, a soft material such as a synthetic resin, copper, a copper alloy, or lead may be interposed as a buffer material in between the cavity or groove and the clamping part. By the presence of the buffer material contact between the clamping part and the tool is brought from being point or linear contact to being planar contact, making for improvement in clamping force and prevention of cracking in cutting tools.

The present invention also affords a method of manufacturing cutting tools the entire rake face of which is made from a high-pressure sintered material, in which cutting-tool rake face a cavity or groove is formed by raising the local energy density of a YAG laser of from 50 to 100 watts output power by pulsed transmission. By adopting the present method, damage due to heat during machining may be kept under control; moreover, satisfactory machined surfaces are obtained.

### Brief Description of Drawings

Fig. 1(a) is an oblique view of a button type of insert having to do with the present invention;
Fig. 1(b) is a sectional view through the middle in Fig. 1(a);
Fig. 2(a) is a view of a separate example, produced through the present invention, of a compression-sintered cutting tool―a triangular insert the entirety of which is constituted by a sintered diamond material;
Fig. 2(b) is a sectional view along A-A' in Fig. 2(a);
Fig. 3 is an oblique view of a compression-sintered cutting tool, produced through the present invention;
Fig. 4 is one example of a cutting tool produced through the present invention;
Fig. 5(a) depicts one example of a cutting tool produced through the present invention;
Fig. 5(b) depicts a sectional view along B-B' in Fig. 5(a);
Fig. 6 is a schematic diagram representing a compression-sintered cutting tool, produced through the present invention, being attached to a toolholder;
Fig. 7(a) is a conventional compression-sintered cutting tool, in which the entirety is constituted by sintered cBN;
Fig. 7(b) is a conventional compression-sintered cutting tool, being bilayered with a high-pressure sintered material and a cemented carbide;
Fig. 7(c) is a conventional compression-sintered cutting tool, in which high-pressure sintered compacts have been brazed into where portions of a carbide substrate have been cut away;
Fig. 8 is a theoretical sectional view of the cavity portion of a high-pressure sintered compact into which a cavity has been wrought by laser machining utilizing the present invention;
Fig. 9 is a sectional view in actuality of the cavity portion of a high-pressure sintered compact into which a cavity has been wrought by laser machining utilizing the present invention; and
Fig. 10 is scanning electron micrograph of the surface of the cavity portion of a compression-sintered cutting tool produced through the present invention.

### Best Mode for Carrying Out the Invention

Embodiments based on the present invention will be explained in the following.

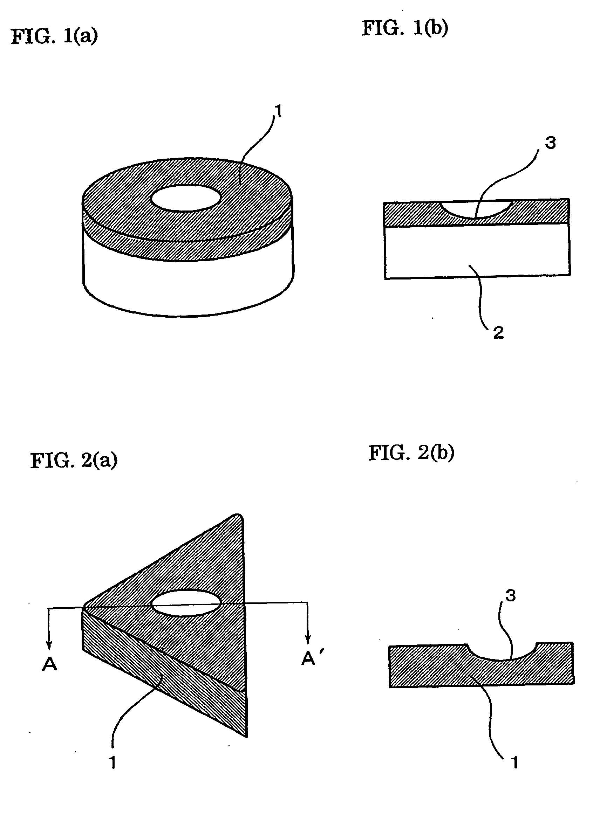

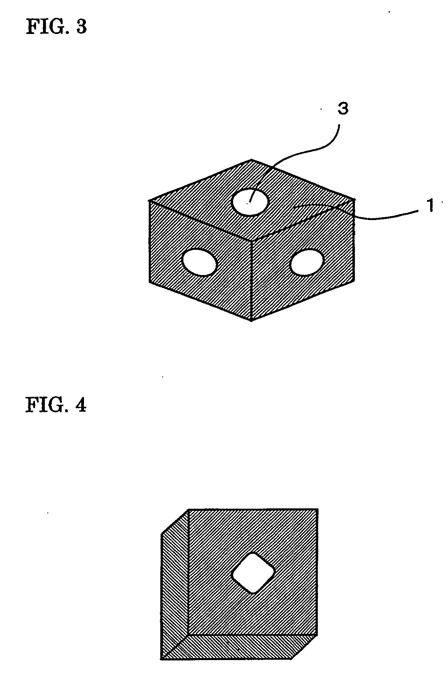

Cutting tools in the present invention have a cavity 3 as shown in Figs. 1, 2 and 3 in the rake face of the high-pressure sintered material (compression-sintered compact). The tool in Fig. 1 is commonly called a button insert, and it has the cavity in about its center portion. The cavity in this example is formed in the compression-sintered section, but depending on the conditions under which the tool is used, the cavity may be formed through to the carbide back-metal part. The cutting tool in Fig. 2 is in the often used triangular form, and the cavity is formed in roughly its center portion. In Fig. 3, the cavity is formed in about the center portion of each face of a parallelepiped. Barring significant flaws such as cracks and breakage, the 24 noses and 12 edges may all be employed.

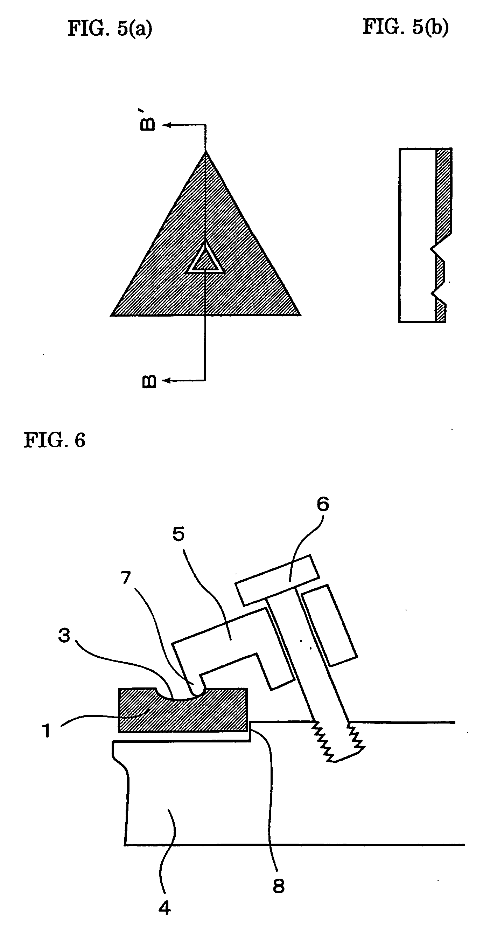

In cases where the line formed by the intersection of the rake face and the cavity possesses curvature, since the cutting-tool drawing-in portion and the cavity will be curved the contact surface area will be reduced. Increasing the contact surface area makes it possible to enhance the retaining strength further. The surface area of contact with the clamping part can be increased if the line constituted by the intersection of the cavity and the rake face has rectilinear segments, as indicated in Fig. 4. In Fig. 5, as is clear from the cross-section along B-B' therein, a cavity in the form of a groove is formed in the tool. Thus, the surface area of retaining contact can be increased because the groove opposite the nose employed in cutting is utilized to hold the tool.

With compression-sintered cutting tools having a cavity or groove as described above, retaining as shown in Fig. 6 is made possible, the positioning precision can be raised, and moreover the clamping strength and reliability can be heightened. In Fig. 6, a compression-sintered cutting tool 1 is placed atop a toolholder 4 and clamped by tightening a cutting-tool drawing-in portion 7 on the leading end of a clamping part 5 down into the tool cavity 3 with a clamp-tightening screw. As shown in the figure, tilting the clamp-tightening screw away from the direction perpendicular to the seat of the cutting tool―tilting the advancing direction of the screw in a tool-opposing direction―enables the force drawing in against the tool to be made stronger. By lending the high-pressure sintered compact a configuration of this sort, even if small the tool can be retained firmly on the holder.

With regard to laser machining of the cavity or groove: With sintered cBN compacts and sintered diamond compacts, if laser machining is carried out in air according to conventional methods, the temperature of the vicinity of where the compact is machined rises due to the heat generated attendant on machining; and in the case of sintered cBN compacts the binder portions undergo thermal deformation, and with sintered diamond compacts the diamond crystals do, which deteriorates the mechanical strength. The extent of the deterioration can amount to 200 µm. Nevertheless, as given by the method according to the present invention, with the laser output power being small, heat generated during machining is rapidly removed through the agency of the comparatively high thermal conductivity of the high-pressure sintered material, whereby the area undergoing thermal transformation can be held down to the 20-40 µm level.

Employing as a laser energy source a YAG laser of 1064 nm wavelength, generally used industrially as a laser for micro-machining, is most effective. Likewise, a semiconductor laser possessing transmission light near the same wavelength also may be employed. Machining the cavity provided in the center portion of the cutting tool is carried out utilizing a high-power pulsed YAG laser in which the output power is adjusted and at the same time light-harvesting is enhanced using a galvanometer mirror, while progressively carving out the tool to contour lines by fixed machining amounts, by controlling output power, oscillating frequency, and milling pitch. With this laser machining method, holding down the total output power of the laser beam and enhancing its light-harvesting level makes it possible to lessen the thermal impact on the machining surface. In addition, directly transmitting to a laser-machining device, hooked up to be able to receive electronic data, shape-modeling data prepared with a three-dimensional CAD system, and configuring the laser-machining device with a CAD-CAM system for automatically generating machining passes from the received shape-modeling data enables machining that is not limited only to general linear cutting work, but extends to intricate forms having irregularly curved surfaces. This aspect of the present invention can be accomplished utilizing, for example, the DML-40 manufactured by Deckel Maho GmbH.

Below, the present invention will be explained in further detail with specific embodiment examples.

### Embodiment 1

A discoid cBN sintered billet having a sintered cBN compact 1―composed of 60 volume % cBN, 20 volume % TiN, and 10 volume % AlN, with the remainder being an intermetallic compound of TiB―compacted and sintered under ultra-high pressure/high temperature, and a cemented carbide back metal 2, was fabricated. A cutting method known to date was used to fashion this into a disk-shaped cutting tool, represented in Fig. 1, of 10 mm diameter and 3.18 mm thickness.

Next, a cavity, depicted in Fig. 1, of 1.6 mm depth was formed in the top of the cutting tool utilizing a pulsed 60 watts YAG laser. After forming the cavity, its surface finish was assayed, wherein the surface roughness was 10 µm in Rz. Likewise utilizing a continuous-wave 100 watts YAG laser, a cavity of the same shape was formed in the top of the cutting tool. The surface roughness of the cavity in this case was Rz 100 µm. The obtained cutting tool was fitted to a toolholder resembling Fig. 6 and put through a cutting test. The workpiece was SKD-11 tempered steel (hardness HRC 55-58); the test conditions were: peripheral speed, 150 m/min; depth of cut, 0.2 mm; feed rate, 0.1 mm/rev. A sintered compact identical with that described above was used for comparison; the cutting tool as it was―in which a cavity was not made―was mounted onto the holder using a clamp-on system and put through a cutting test under the same conditions.

The cutting tool not having a cavity produced chatter in the machined surface. In contrast, with the cutting tool in which a cavity was formed with the pulsed laser, because not only the tightening force in the thrust direction but also a drawing-in force toward the toolholder pocket was generated, a more stabilized retaining power could be gained. Machining without producing chatter in the machined surface was consequently possible. What is more, bringing the tip-end portion of the clamping piece into contact with a cemented carbide, the transverse rupture strength of which is higher than cBN, enabled clamping with a firmer tightening torque and made it so that stabilized machining without chatter was possible even though the cutting depth was enlarged to 0.35 mm.

As far as the cutting tool in which the cavity was formed with the continuous-wave laser is concerned, the tool cracked through the cavity in the midst of machining, and beyond that point work was not possible.

### Embodiment 2

A sintered compact composed of 90 volume % diamond content with the remainder being cobalt and tungsten, compacted and sintered under ultra-high pressure/high temperature, was prepared. There was no cemented carbide reinforcement on this sintered compact. The compact was cut by wire electric-discharge machining into the form, represented in Fig. 2, of an code TNMN-120404 indexable insert. Next, a 70 watts laser was utilized to provide the sintered compact with a cavity in its center portion. The cavity depth was 2.1 mm; the cavity diameter, 4.2 mm.

A cutting test using this cutting tool was implemented. The workpiece was SKD-61 tempered steel (hardness HRC 60-62); the test conditions were: peripheral speed, 200 m/min; depth of cut, 0.2 mm; feed rate, 0.15 mm/rev. A sintered compact identical with that just described was used for comparison; the cutting tool as it was―in which a cavity was not made―was mounted onto the holder using a clamp-on system and put through a cutting test under the same conditions.

The cutting tool not having a cavity produced chatter in the machined surface. In contrast, with the cutting tool in which a cavity was formed, not only the tightening force in the thrust direction but also a drawing-in force toward the toolholder pocket was generated, which made it so that a more stabilized retaining power could be gained. Machining without producing chatter in the machined surface was consequently possible.

What is more, as a result of interposing a plate element consisting of a copper alloy 0.3 mm in thickness as a buffer in between the tip-end portion of the clamping piece and the contact portion of the cavity, clamping with a firmer tightening torque was possible, allowing stabilized machining without occurrence of chatter even though the cutting depth was enlarged to 0.3 mm.

### Embodiment 3

A discoid, sintered cBN billet composed of 92 volume % cBN with the remainder being cobalt, tungsten and boron, compacted and sintered under ultra-high pressure/high temperature, was fabricated. This sintered billet was reinforced by a cemented-carbide back metal. The billet was fashioned into a code SNGN-120404 cutting tool, as represented in Fig. 4, and subjected to a cutting test.

Since with this tool, compared with those of Embodiments 1 and 2, the cutting load was high, the surface area of the cavity in contact with the drawing-in portion of the cutting tool ought to be extended, wherein the tool was lent the following structure. That is, by rendering the structure so that lines formed by the intersection of the rake face and the cavity sections that are reciprocal to the cutting edges will be rectilinear, and thereby increasing the surface area where the drawing-in portion of the cutting tool seats in the cavity, the clamping force is enhanced.

The workpiece was SUJ2 (HRC 62-64); the test conditions were: peripheral speed, 180 m/min; depth of cut, 0.2 mm; feed rate, 0.2 m/rev. A sintered compact identical with that just described was used for comparison; the cutting tool as it was―in which a cavity was not made―was mounted onto the holder using a clamp-on system and put through a cutting test under the same conditions.

The cutting tool not having a cavity produced chatter in the machined surface. In contrast, with the cutting tool in which a cavity was formed, not only the tightening force in the thrust direction but also a drawing-in force toward the toolholder pocket was generated, which made it so that a firmer retaining power could be gained, allowing as a result machining without producing chatter in the machined surface.

### Embodiment 4

A sintered compact composed of 85 volume % diamond content with the remainder being cobalt, compacted and sintered under ultra-high pressure/high temperature, was prepared. There was no cemented carbide reinforcement on this sintered compact. A code TBGN-06102 cutting tool was cut out of this sintered compact, and grooves as depicted in Fig. 5 were provided in sections opposing the cutting edges. By increasing the surface area of where in the cavity the cutting tool drawing-in portion seats, the retention force was enhanced.

The evaluation in the present embodiment was under high-speed, high-load conditions. The workpiece was ADC-12 and the test conditions were: peripheral speed, 280 m/min; depth of cut, 2.5 mm; feed rate, 0.5 mm/rev. A sintered compact identical with that just described was used for comparison; the cutting tool as it was―in which a cavity was not made―was mounted onto the holder using a clamp-on system and put through a cutting test under the same conditions.

In the cutting tool in which a cavity was not formed, owing to lack of retention strength breakage arose in the cutting nose during descent; in contrast, in the cutting tool in which a cavity was formed, not only the tightening force in the thrust direction but also a drawing-in force toward the toolholder pocket was generated, which made it so that a firmer retaining power could be gained, as result of which cutting-tip breakage was not generated.

### Embodiment 5

A cBN sintered compact containing 85% by volume cBN particles of 10 µm mean particle diameter, with the remainder being an aluminum compound whose chief components were AlN and AlB₂, was sintered under ultra-high pressure and high-temperature conditions of 4 GPa and 1200°C. This sintered compact was cut with a YAG laser to fabricate an ISO code SNGN-120416 cutting tool, the tool entirety of which was constituted by a cBN sintered substance, (denoted "solid cBN sinter tool" in the following). Next, a pulsed 60 watts YAG laser was utilized to form in the tool a frustum cavity of 1.6 mm depth, and φ 8.4 mm to φ 3.0 mm diameter, whereby a SNGX-120416 cBN sinter cutting tool was manufactured.

The obtained cutting tool was fitted to a toolholder and put through a cutting test. The workpiece, a round bar of FC250, was worked under wet conditions at a cutting speed V= 1500 m/min, depth-of-cut d = 5 mm, and feed rate F= 0.4 mm/rev. For comparison, cutting evaluations were performed using the following cutting tools: an ISO code SNGN-120416 without a cavity and an ISO code SNGA-120416 having a hole, both composed of the same solid cBN sintered material; and an ISO code SNGX-120416 of a commercially available Si₃N₄ sintered material, having an elliptical cavity.

With the ISO code SNGN-120416 cutting tool without a cavity and made of the solid cBN sintered material, at a point 44 seconds after the start of cutting there was no abnormal damage such as breakage at all in the tool, but the cutting tool went stray in the feeding component-force direction, leaving a step-break in the machining surface that rendered succeeding work impossible.

With the ISO code SNGX-120416 cutting tool having the elliptical cavity and made of a commercially available Si₃N₄ sintered material, at a point 30 seconds after the start of cutting although a flank wear width *VB* of 200 µm developed and 30-µm chipping occurred, continuing was possible; at a point 38 seconds thereafter, however, due to breakage the cutting tool was totally destroyed. With the cutting tool in this instance, from the marred face of the damaged tool, it was inferred that the clamping piece seated lopsidedly against the elliptical cavity, and from that region the tool cracked and failed.

With the ISO code SNGA-120416 cutting tool having a hole and made of the solid cBN sintered material, after the start of cutting, when there had been build-up on the round-bar workpiece 315 seconds later, cracking occurred in the lateral faces of the cutting tool, rendering succeeding cutting impossible.

With the SNGX-120416 cBN sinter cutting tool in which a frustum cavity was formed―the tool that is an aspect of the present invention―with wear being normal and flank wear width *VB* being a small 100 µm even after 600 seconds, succeeding machining was possible.

### Embodiment 6

The sintered diamond material fabricated in Embodiment 2 was utilized to fashion a cavity, illustrated in Fig. 1, of 1.6 mm depth using the laser machining method of the present invention, as well as electric-discharge machining.

The laser machining was implemented at 60 watts output power. For the electric-discharge machining electrodes complementary to the form of the hollow were readied, an electrode was set across the rake face of the sintered material, and machining was implemented while, with the expendable life of the electrodes running out due to the electric sparking, replacing the electrodes until the form of the cavity turned out as planned.

To form a single cavity by the laser machining took 5 minutes 30 seconds; but by the electrode-discharge machining, 5 electrodes had to be used, and 45 min machining time was required.

### Embodiment 7

The cBN sintered compact fabricated in Embodiment 5 was utilized to fashion a frustum cavity of 1.6 mm depth, and φ 8.4 mm to φ 3.0 mm diameter, using the laser machining method of the present invention, as well as a grinding operation with grinding wheels. Here, the same sintered material was utilized in an attempt to fashion by electric-discharge machining a cavity of the same configuration as just stated, but the work did not progress and was suspended. The electrical resistivity of this sintered material was measured and was found to be 5 mΩ·cm.

The laser machining was implemented at 60 watts output power. For the grinding operation rotary grindstones complementary to the form of the hollow were readied, a grindstone was set across the face of the sintered material on the cBN side, and grinding was implemented while, with the expendable life of the grindstones running out due to wear, replacing the grindstone until the form of the cavity turned out as planned.

To form a single cavity by the laser machining took 7 minutes, but by the grinding operation, 20 grindstones had to be used, and 80 hours operating time was required.

### Industrial Applicability

In connection with the present invention as in the foregoing, compression-sinter cutting tools having a cavity can be retained with ease and with high dimensional precision. The benefits are particularly pronounced in small cutting-tool applications. Meanwhile, a manufacturing method that has to do with the present invention makes it possible to machine cavities in a variety of shapes at high speed and with minimal machining-induced damage into the rake face of cutting tools.

## Claims

1. A compression-sinter cutting tool, **characterized in that** its entire cutting face is constituted by a high-pressure sintered material, and in having either a cavity or groove in the center portion of the cutting face for clamping the tool onto a toolholder.

2. A compression-sinter cutting tool as set forth in claim 1, **characterized in that** the side opposite the cutting face of said high-pressure sintered material is reinforced with a cemented carbide.

3. A compression-sinter cutting tool as set forth in either claim 1 or 2, **characterized in that** said high-pressure sintered material is either a sintered cBN material or a sintered diamond material.

4. A compression-sinter cutting tool as set forth in any of claims 1 to 3, **characterized in that** the line constituted by the intersection between either the cavity or the groove and the cutting face has rectilinear segments.

5. A compression-sinter cutting tool as set forth in any of claims 1 to 3, **characterized in that** the cavity is in the form of either a cone or a frustum.

6. A compression-sinter cutting tool as set forth in any of claims 1 to 5, **characterized in that** the cavity or the groove is formed by means of a laser.

7. A compression-sinter cutting tool as set forth in any of claims 1 to 6, **characterized in that** electrical resistivity of the tool region having the cavity is 1 mΩ·cm or more.

8. A clamping mechanism for a compression-sinter cutting tool, **characterized in** being rendered so as to draw in a cutting tool the entire cutting face of which is constituted by a high-pressure sintered material and which has either a cavity or groove in the approximate center portion of the cutting face for attaching the tool to a toolholder, with a drawing-in portion of a clamping part attached to the holder seating in the cavity or the groove, against a tool-binding face of the holder.

9. A compression-sinter cutting tool clamping mechanism as set forth in claim 8, **characterized in that** a material being selected from synthetic resins, copper, copper alloys, or lead is interposed as a buffer element in between the cavity or the groove and the clamping part.

10. A method of manufacturing compression-sinter cutting tools, **characterized in that** a YAG laser of from 50 to 100 watts output power by pulsed transmission is utilized to form either a cavity or a groove in the cutting face of a cutting tool whose entire cutting face is made from a high-pressure sintered material.
